# EUROPEAN PATENT APPLICATION

(11) **EP 4 779 788 A1**
(43) Date of publication of application: **22.07.2026**
(21) Application number: 25831309.7
(22) Date of filing: 04.04.2025
(51) Int. Cl.: H01M 50/502, H01M 50/507, H01M 50/553, H01M 50/516

(54) **BATTERY CELL ASSEMBLY**

(30) Priority: 17.06.2024 KR 20240078520
(71) Applicant: LG ENERGY SOLUTION, LTD., Seoul 07335 (KR)
(72) Inventor: YOON, Doo Han, Daejeon 34122 (KR); KIM, Hong Gyun, Daejeon 34122 (KR)
(74) Representative: Plasseraud IP
(86) International application number: PCT/KR2025/095160
(87) International publication number: WO 2025/264075

(57) **Abstract**

Embodiments provide a battery cell assembly. The battery cell assembly includes: first and second battery cells each including first and second electrode assemblies each including a positive electrode, a negative electrode, and a separator, first terminal assemblies coupled to the first and second electrode assemblies and including first terminals, second terminal assemblies coupled to the first and second electrode assemblies and including second terminals, and a cell case covering the first and second electrode assemblies and the first and second terminal assemblies; and an inter-bus bar connected to the first and second battery cells.

## Description

### [Technical Field]

The present disclosure relates to a battery cell assembly. The present application claims the benefit of priority based on Korean Patent Application No. 10-2024-0078520, filed on June 17, 2024, and the entire contents of the Korean patent application is incorporated herein by reference.

### [Background Art]

Secondary batteries can be charged and discharged a plurality of times unlike primary batteries. Secondary batteries are widely used as energy sources for various types of wireless devices such as handsets, laptop computers, and cordless vacuum cleaners. Recently, the main use of secondary batteries is moving from mobile devices to mobility, as manufacturing costs per unit capacity of secondary batteries drastically decrease due to improvements in energy density and economies of scale and a range of battery electric vehicles (BEVs) increases to the same level as fuel vehicles.

A trend in the development of technology for secondary batteries for mobility is an improvement in energy density and safety. Here, the energy density of a secondary battery is a value obtained by dividing a maximum level of electrical energy that the secondary battery may store by the mass of the secondary battery. A high energy density of the secondary battery is directly related to the driving efficiency and range of mobility, and thus various studies are being conducted to improve the energy density of secondary batteries.

### [Disclosure]

### [Technical Problem]

The present disclosure is directed to providing a battery cell assembly with improved safety and reliability.

### [Technical Solution]

Embodiments of the present disclosure provide a battery cell assembly. The battery cell assembly includes: first and second battery cells each including first and second electrode assemblies each including a positive electrode, a negative electrode, and a separator, first terminal assemblies coupled to the first and second electrode assemblies and including first terminals, second terminal assemblies coupled to the first and second electrode assemblies and including second terminals, and a cell case covering the first and second electrode assemblies and the first and second terminal assemblies; and an inter-bus bar connected to the first and second battery cells.

The first terminal assembly of each of the first and second battery cells may further include a first bus bar connected to the positive electrode of each of the first and second electrode assemblies, the first bus bar may be penerated by each of the first terminals, the second terminal assembly of each of the first and second battery cells may further include a second bus bar connected to the negative electrode of each of the first and second electrode assemblies, and the second bus bar may be penetrated by each of the second terminals.

The first terminal assembly of each of the first and second battery cells may include first bus bar blocks in contact with the first bus bar and a corresponding one of the first terminals, and the second terminal assembly of each of the first and second battery cells may include second bus bar blocks in contact with the second bus bar and a corresponding one of the second terminals.

The inter-bus bar may be in contact with each of the first terminals, and the inter-bus bar may be in contact with each of the second terminals.

The inter-bus bar may be welded with each of the first terminals, and may be welded with each of the second terminals.

The inter-bus bar may include first welding patterns overlapping the first terminals and second welding patterns overlapping the second terminals.

Each of the first welding patterns and the second welding patterns may have a line shape.

Embodiments provide a battery cell assembly. The battery cell assembly includes: first and second battery cells arranged in a fisrt direction and each including first terminal assemblies with first terminals and second terminal assemblies with second terminals; and an inter-bus bar in contact with each of the first terminals and each of the second teminals.

The inter-bus bar may include first welding patterns overlapping the first terminals in a second direction perpendicular to the first direction, and second welding patterns overlapping the second terminals in the second direction.

Each of the first welding patterns and the second welding patterns may have a line shape.

The first welding patterns may overlap each other in a third direction perpendicular to each of the first and second directions.

The second welding patterns may overlap each other in the third direction.

### [Advantageous Effects]

According to embodiments of the present disclosure, an inter-bus bar is welded with two or more terminals of battery cells to increase a current carrying area, thereby improving the electrical performance of a battery cell assembly, and thus, degradation of the electrical performance can be prevented even when a thickness of the inter-bus bar is reduced. The reduction of the thickness of the inter-bus bar may contribute to improvement of the reliability of a welding process and the mechanical robustness of the battery cell assembly.

Effects achievable from embodiments of the present disclosure are not limited to the above-described effects, and other effects that are not described herein will be clearly derived and understood by those of ordinary skill in the art to which the embodiments of the present disclosure pertain from the following description. That is, unintended effects achieved when the embodiments of the present disclosure are implemented are derivable by those of ordinary skill in the art from the embodiments of the present disclosure.

### [Brief Description of the Drawings]

FIGS. 1 and 2 are perspective views of a battery cell assembly according to embodiments.
FIGS. 3 and 4 are perspective views of a battery cell according to embodiments.
FIGS. 5 and 6 are exploded perspective views of a battery cell according to embodiments.
FIG. 7 is a cross-sectional view taken along line 3I-3I' of FIG. 3.
FIG. 8 is a perspective view of a battery pack according to embodiments of the present disclosure.
FIG. 9 is an exploded perspective view of the battery pack of FIG. 8.
FIG. 10 is a perspective view for describing the battery pack of FIG. 8.

### [Best Mode]

Hereinafter, embodiments of the present disclosure will be described in detail with reference to the accompanying drawings. Before describing embodiments of the present disclosure, the terms or expressions used in the present specification and claims should not be construed as being limited to as generally understood or as defined in commonly used dictionaries, and should be understood according to meanings and concepts corresponding to the present disclosure on the basis of the principle that the inventor(s) of the application can appropriately define the terms or expressions to optimally explain the present disclosure.

Therefore, embodiments set forth herein and configurations illustrated in the drawings are only examples of the present disclosure and do not reflect all the technical ideas of the present disclosure and thus it should be understood that various equivalents and modifications that replace the configurations would have been made at the filing date of the present application.

Well-known configurations or functions related to describing the present disclosure are not described in detail when it is determined that they would obscure the subject matter of the present disclosure due to unnecessary detail.

Because embodiments of the present disclosure are provided to more fully explain the present disclosure to those of ordinary skill in the art, the shapes, sizes, etc. of components illustrated in the drawings may be exaggerated, omitted, or schematically illustrated for clarity. Therefore, it should not be understood that the sizes or proportions of components fully reflect the actual sizes or proportions thereof.

### (First Embodiment)

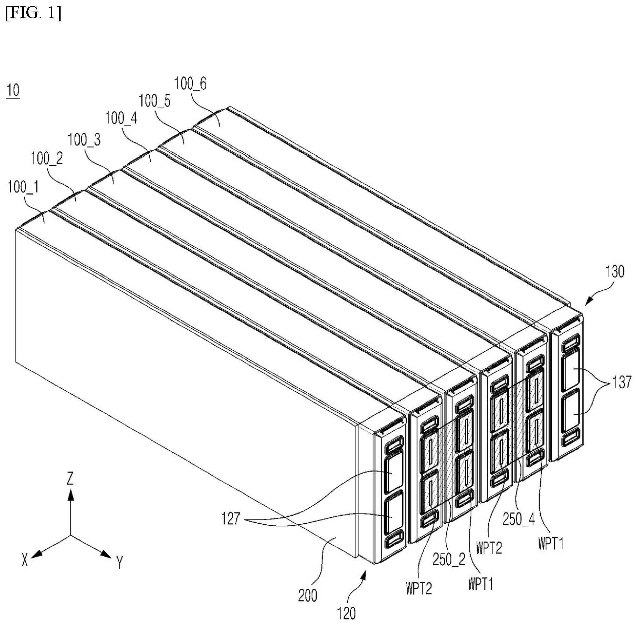

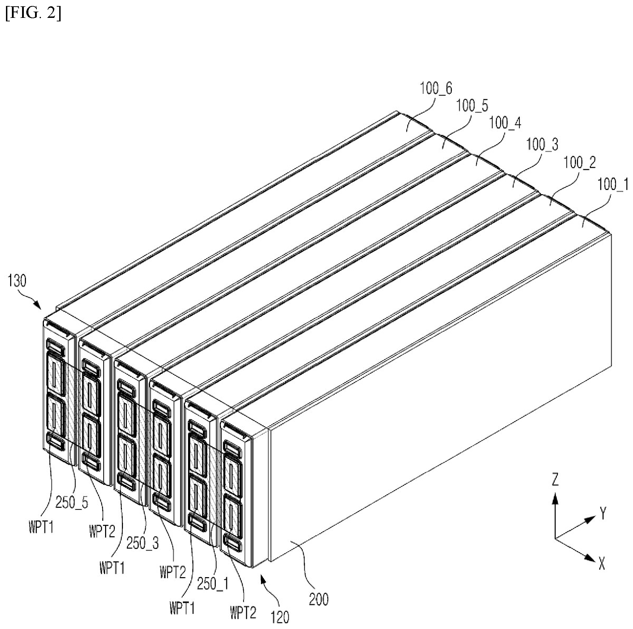

FIGS. 1 and 2 are perspective views of a battery cell assembly 10 according to embodiments. More specifically, FIG. 2 is a perspective view of the battery cell assembly 10 when viewed in a direction different from that of FIG. 1.

Referring to FIGS. 1 and 2, the battery cell assembly 10 may include a plurality of battery cells 100_1, 100_2, 100_3, 100_4, 100_5 and 100_6, a plurality of pads 200, and a plurality of inter-bus bars 250_1, 250_2, 250_3, 250_4 and 250_5.

Referring to FIGS. 1 and 2, the plurality of battery cells 100_1, 100_2, 100_3, 100_4, 100_5 and 100_6 may be arranged in an X-axis direction. First and second terminals 127 and 137 of the plurality of battery cells 100_1, 100_2, 100_3, 100_4, 100_5 and 100_6 may be spaced apart from each other in a Y-axis direction. A Z-axis direction may be spaced apart from the X-axis direction and the Y-axis direction.

Each of the plurality of battery cells 100_1, 100_2, 100_3, 100_4, 100_5 and 100_6 may include a first terminal assembly 120 including first terminals 127 and a second terminal assembly 130 including second terminals 137. The first terminal assembly 120 and the second terminal assembly 130 may be spaced apart from each other in the Y-axis direction. The first terminal assembly 120 may be on one end of the battery cell 100 in the Y-axis direction, and the second terminal assembly 130 may be on another end of the battery cell 100 in the Y-axis direction.

An orientation of the odd-numbered battery cells 100_1, 100_3 and 100_5 and an orientation of the even-numbered battery cells 100_2, 100_4 and 100_6 may be different from each other. The orientation of the odd-numbered battery cells 100_1, 100_3 and 100_5 and the orientation of the even-numbered battery cells 100_2, 100_4 and 100_6 may be opposite to each other.

The first terminal assemblies 120 of the odd-numbered battery cells 100_1, 100_3 and 100_5 and the second terminal assemblies 130 of the even-numbered battery cells 100_2, 100_4 and 100_6 may be adjacent to each other. The first terminal assemblies 120 of the odd-numbered battery cells 100_1, 100_3 and 100_5 and the second terminal assemblies 130 of the even-numbered battery cells 100_2, 100_4 and 100_6 may overlap each other in the X-axis direction.

The second terminal assemblies 130 of the odd-numbered battery cells 100_1, 100_3 and 100_5 and the first terminal assemblies 120 of the even-numbered battery cells 100_2, 100_4 and 100_6 may be adjacent to each other. The second terminal assemblies 130 of the odd-numbered battery cells 100_1, 100_3 and 100_5 and the first terminal assemblies 120 of the even-numbered battery cells 100_2, 100_4 and 100_6 may overlap each other in the X-axis direction.

According to embodiments, the plurality of pads 200 may alternate with a plurality of battery cells 100_1, 100_2, 100_3, 100_4, 100_5, and 100_6 in the X-axis direction. A corresponding one of the plurality of battery cells 100_1, 100_2, 100_3, 100_4, 100_5 and 100_6 may be between two adjacent pads among the plurality of pads 200, and a corresponding one of the plurality of pads 200 may be between two adjacent battery cells among the plurality of battery cells 100_1, 100_2, 100_3, 100_4, 100_5 and 100_6.

The plurality of pads 200 may include an elastic material. The plurality of pads 200 may include, for example, polyurethane. The plurality of pads 200 may absorb swelling of the plurality of battery cells 100_1, 100_2, 100_3, 100_4, 100_5 and 100_6. The plurality of pads 200 may be thermal separators.

Each of the plurality of inter-bus bars 250_1, 250_2, 250_3, 250_4 and 250_5 may have an approximate plate shape. Each of the plurality of inter-bus bars 250_1, 250_2, 250_3, 250_4 and 250_5 may include, for example, a metal such as aluminum.

The plurality of inter-bus bars 250_1, 250_2, 250_3, 250_4, and 250_5 may connect the plurality of battery cells 100_1, 100_2, 100_3, 100_4, 100_5, and 100_6 to one another. The plurality of inter-bus bars 250_1, 250_2, 250_3, 250_4, and 250_5 may connect the plurality of battery cells 100_1, 100_2, 100_3, 100_4, 100_5, and 100_6 in series.

The odd-numbered inter-bus bars 250_1, 250_3 and 250_5 may be adjacent to the second terminal assemblies 130 of the odd-numbered battery cells 100_1, 100_3, and 100_5 and the first terminal assemblies 120 of the even-numbered battery cells 100_2, 100_4, and 100_6.

The even-numbered inter-bus bars 250_2 and 250_4 may be adjacent to the first terminal assemblies 120 of the odd-numbered battery cells 100_1, 100_3, and 100_5 and the second terminal assemblies 130 of the even-numbered battery cells 100_2, 100_4, and 100_6.

The inter-bus bar 250_1 may connect the second terminals 137 of the battery cell 100_1 to the first terminals 127 of the battery cell 100_2. The inter-bus bar 250_1 may be in contact with each of the second terminals 137 of the battery cell 100_1 and the first terminals 127 of the battery cell 100_2. The inter-bus bar 250_1 may overlap each of the second terminals 137 of the battery cell 100_1 and the first terminals 127 of the battery cell 100_2 in the Y-axis direction. The inter-bus bar 250_1 may be welded to each of the second terminals 137 of the battery cell 100_1 and the first terminals 127 of the battery cell 100_2 and thus a current carrying path may be provided between the battery cell 100_1 and the battery cell 100_2.

The inter-bus bar 250_1 may include first welding patterns WPT1. Each of the first welding patterns WPT1 of the inter-bus bar 250_1 may be formed in a welding process of the inter-bus bar 250_1 and the first terminals 127 of the battery cell 100_2. Each of the first welding patterns WPT1 of the inter-bus bar 250_1 may overlap a corresponding one of the first terminals 127 of the battery cell 100_2 in the Y-axis direction. Each of the first welding patterns WPT1 may have a line shape. Each of the first welding patterns WPT1 may extend in the Z-axis direction. The first welding patterns WPT1 may overlap each other in the Z-axis direction.

The inter-bus bar 250_1 may include second welding patterns WPT2. Each of the second welding patterns WPT2 of the inter-bus bar 250_1 may be formed in a welding process of the inter-bus bar 250_1 and the second terminals 137 of the battery cell 100_1. Each of the second welding patterns WPT2 of the inter-bus bar 250_2 may overlap a corresponding one of the second terminals 137 of the battery cell 100_1 in the Y-axis direction. Each of the second welding patterns WPT2 may have a line shape. Each of the second welding patterns WPT2 may extend in the Z-axis direction. The second welding patterns WPT2 may overlap each other in the Z-axis direction.

The inter-bus bar 250_2 may connect the second terminals 137 of the battery cell 100_2 to the first terminals 127 of the battery cell 100_3. The inter-bus bar 250_2 may be in contact with each of the second terminals 137 of the battery cell 100_2 and the first terminals 127 of the battery cell 100_3. The inter-bus bar 250_1 may overlap each of the second terminals 137 of the battery cell 100_2 and the first terminals 127 of the battery cell 100_3 in the Y-axis direction. The inter-bus bar 250_2 may be welded to each of the second terminals 137 of the battery cell 100_2 and the first terminals 127 of the battery cell 100_3 and thus a current carrying path may be provided between the battery cell 100_2 and the battery cell 100_3.

The inter-bus bar 250_2 may include first welding patterns WPT1. Each of the first welding patterns WPT1 of the inter-bus bar 250_2 may be formed in a welding process of the inter-bus bar 250_2 and the first terminals 127 of the battery cell 100_3. Each of the first welding patterns WPT1 of the inter-bus bar 250_2 may overlap a corresponding one of the first terminals 127 of the battery cell 100_3 in the Y-axis direction. Each of the first welding patterns WPT1 may have a line shape. Each of the first welding patterns WPT1 may extend in the Z-axis direction. The first welding patterns WPT1 may overlap each other in the Z-axis direction.

The inter-bus bar 250_2 may include second welding patterns WPT2. Each of the second welding patterns WPT2 of the inter-bus bar 250_2 may be formed in a welding process of the inter-bus bar 250_2 and the second terminals 137 of the battery cell 100_2. Each of the second welding patterns WPT2 of the inter-bus bar 250_2 may overlap a corresponding one of the second terminals 137 of the battery cell 100_2 in the Y-axis direction. Each of the second welding patterns WPT2 may have a line shape. Each of the second welding patterns WPT2 may extend in the Z-axis direction. The second welding patterns WPT2 may overlap each other in the Z-axis direction.

The inter-bus bar 250_3 may connect the second terminals 137 of the battery cell 100_3 to the first terminals 127 of the battery cell 100_4. The inter-bus bar 250_3 may be in contact with each of the second terminals 137 of the battery cell 100_3 and the first terminals 127 of the battery cell 100_4. The inter-bus bar 250_3 may overlap each of the second terminals 137 of the battery cell 100_3 and the first terminals 127 of the battery cell 100_4 in the Y-axis direction. The inter-bus bar 250_3 may be welded to each of the second terminals 137 of the battery cell 100_3 and the first terminals 127 of the battery cell 100_4 and thus a current carrying path may be provided between the battery cell 100_3 and the battery cell 100_4.

The inter-bus bar 250_3 may include first welding patterns WPT1. Each of the first welding patterns WPT1 of the inter-bus bar 250_3 may be formed in a welding process of the inter-bus bar 250_3 and the first terminals 127 of the battery cell 100_4. Each of the first welding patterns WPT1 of the inter-bus bar 250_3 may overlap a corresponding one of the first terminals 127 of the battery cell 100_4 in the Y-axis direction. Each of the first welding patterns WPT1 may have a line shape. Each of the first welding patterns WPT1 may extend in the Z-axis direction. The first welding patterns WPT1 may overlap each other in the Z-axis direction.

The inter-bus bar 250_3 may include second welding patterns WPT2. Each of the second welding patterns WPT2 of the inter-bus bar 250_3 may be formed in a welding process of the inter-bus bar 250_3 and the second terminals 137 of the battery cell 100_3. Each of the second welding patterns WPT2 of the inter-bus bar 250_3 may overlap a corresponding one of the second terminals 137 of the battery cell 100_3 in the Y-axis direction. Each of the second welding patterns WPT2 may have a line shape. Each of the second welding patterns WPT2 may extend in the Z-axis direction. The second welding patterns WPT2 may overlap each other in the Z-axis direction.

The inter-bus bar 250_4 may connect the second terminals 137 of the battery cell 100_4 to the first terminals 127 of the battery cell 100_5. The inter-bus bar 250_4 may be in contact with each of the second terminals 137 of the battery cell 100_4 and the first terminals 127 of the battery cell 100_5. The inter-bus bar 250_4 may overlap each of the second terminals 137 of the battery cell 100_4 and the first terminals 127 of the battery cell 100_5 in the Y-axis direction. The inter-bus bar 250_4 may be welded to each of the second terminals 137 of the battery cell 100_4 and the first terminals 127 of the battery cell 100_5 and thus a current carrying path may be provided between the battery cell 100_4 and the battery cell 100_5.

The inter-bus bar 250_4 may include first welding patterns WPT1. Each of the first welding patterns WPT1 of the inter-bus bar 250_4 may be formed in a welding process of the inter-bus bar 250_4 and the first terminals 127 of the battery cell 100_5. Each of the first welding patterns WPT1 of the inter-bus bar 250_4 may overlap a corresponding one of the first terminals 127 of the battery cell 100_5 in the Y-axis direction. Each of the first welding patterns WPT1 may have a line shape. Each of the first welding patterns WPT1 may extend in the Z-axis direction. The first welding patterns WPT1 may overlap each other in the Z-axis direction.

The inter-bus bar 250_4 may include second welding patterns WPT2. Each of the second welding patterns WPT2 of the inter-bus bar 250_4 may be formed in a welding process of the inter-bus bar 250_4 and the second terminals 137 of the battery cell 100_4. Each of the second welding patterns WPT2 of the inter-bus bar 250_4 may overlap a corresponding one of the second terminals 137 of the battery cell 100_4 in the Y-axis direction. Each of the second welding patterns WPT2 may have a line shape. Each of the second welding patterns WPT2 may extend in the Z-axis direction. The second welding patterns WPT2 may overlap each other in the Z-axis direction.

The inter-bus bar 250_5 may connect the second terminals 137 of the battery cell 100_5 to the first terminals 127 of the battery cell 100_6. The inter-bus bar 250_55 may be in contact with each of the second terminals 137 of the battery cell 100_4 and the first terminals 127 of the battery cell 100_6. The inter-bus bar 250_5 may overlap each of the second terminals 137 of the battery cell 100_5 and the first terminals 127 of the battery cell 100_6 in the Y-axis direction. The inter-bus bar 250_5 may be welded to each of the second terminals 137 of the battery cell 100_5 and the first terminals 127 of the battery cell 100_6 and thus a current carrying path may be provided between the battery cell 100_5 and the battery cell 100_6.

The inter-bus bar 250_5 may include first welding patterns WPT1. Each of the first welding patterns WPT1 of the inter-bus bar 250_5 may be formed in a welding process of the inter-bus bar 250_5 and the first terminals 127 of the battery cell 100_6. Each of the first welding patterns WPT1 of the inter-bus bar 250_5 may overlap a corresponding one of the first terminals 127 of the battery cell 100_6 in the Y-axis direction. Each of the first welding patterns WPT1 may have a line shape. Each of the first welding patterns WPT1 may extend in the Z-axis direction. The first welding patterns WPT1 may overlap each other in the Z-axis direction.

The inter-bus bar 250_5 may include second welding patterns WPT2. Each of the second welding patterns WPT2 of the inter-bus bar 250_5 may be formed in a welding process of the inter-bus bar 250_5 and the second terminals 137 of the battery cell 100_5. Each of the second welding patterns WPT2 of the inter-bus bar 250_5 may overlap a corresponding one of the second terminals 137 of the battery cell 100_5 in the Y-axis direction. Each of the second welding patterns WPT2 may have a line shape. Each of the second welding patterns WPT2 may extend in the Z-axis direction. The second welding patterns WPT2 may overlap each other in the Z-axis direction.

According to embodiments, each of the plurality of battery cells 100_1, 100_2, 100_3, 100_4, 100_5, and 100_6 includes first terminals 127 and the second terminals 137, and thus, when an electrical circuit is configured through a connection between the plurality of battery cells 100_1, 100_2, 100_3, 100_4, 100_5, and 100_6, a sufficient cross-sectional area of a path of current may be secured regardless of a small thickness of the plurality of inter-bus bars 250_1, 250_2, 250_3, 250_4, and 250_5.

When the thickness of each of the plurality of inter-bus bars 250_1, 250_2, 250_3, 250_4, and 250_5 is small, the difficulty of welding the plurality of inter-bus bars 250_1, 250_2, 250_3, 250_4, and 250_5 and the plurality of battery cells 100_1, 100_3, 100_4, 100_5, and 100_6 using laser beams decreases, thus improving the electrical performance, connection reliability, and mechanical strength of the battery cell assembly 10.

In addition, even when some of the first and second welding patterns WPT2 are not formed or damaged, a current path may be provided through the other first and second welding patterns WPT and WPT2, thereby preventing a defect of the battery cell assembly 10 due to undesired short circuit and open circuit.

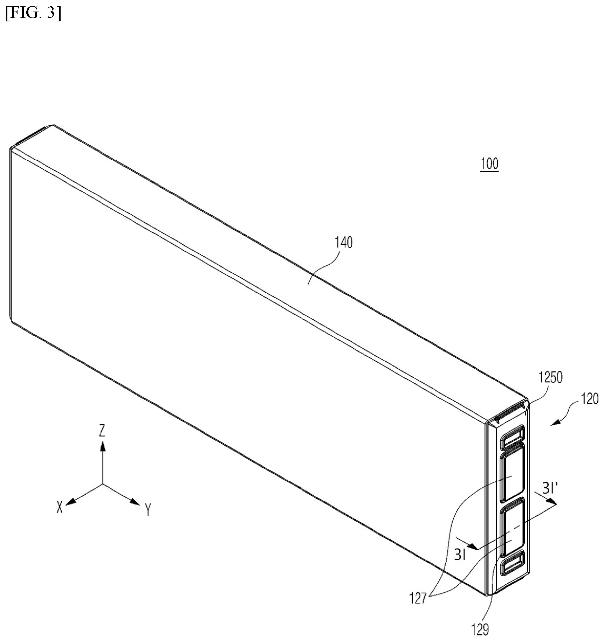

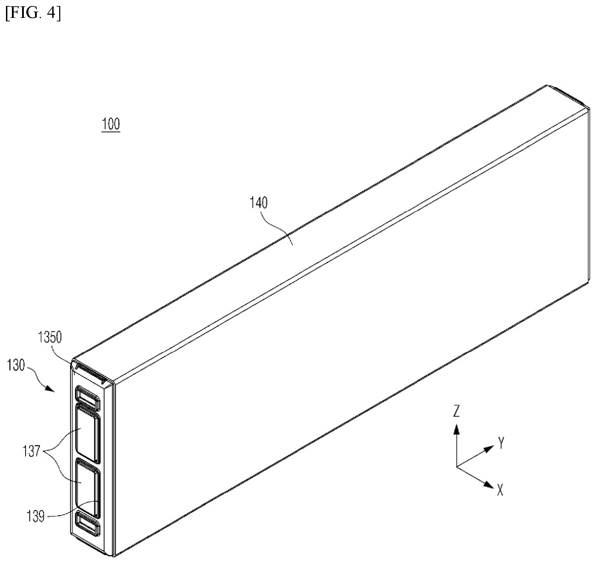

FIGS. 3 and 4 are perspective views of a battery cell 100 according to embodiments. More specifically, FIG. 4 is a perspective view of the battery cell 100 when viewed in a direction different from that of FIG. 3. Each of the plurality of battery cells 100_1, 100_2, 100_3, 100_4, 100_5, and 100_6 of FIGS. 1 and 2 may be substantially the same as the battery cell 100 of FIGS. 3 to 7.

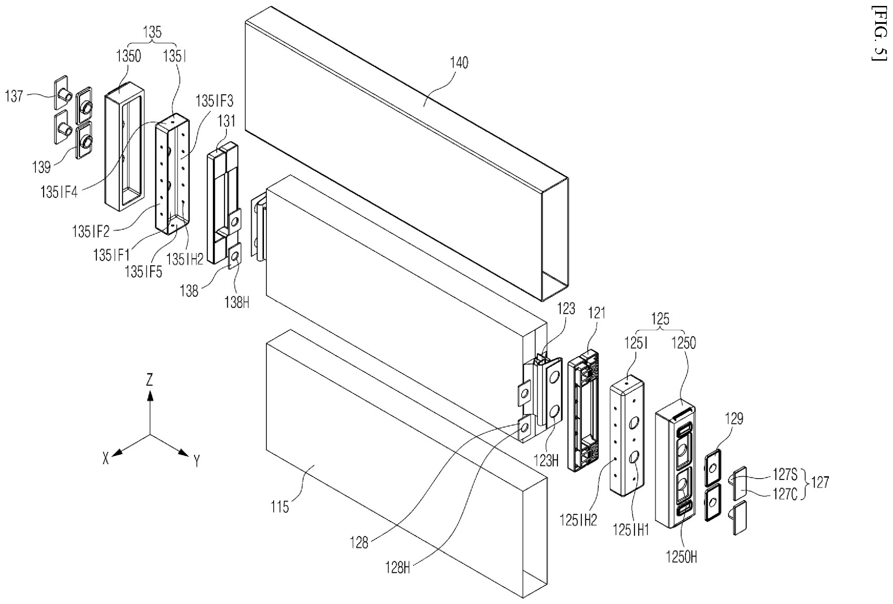

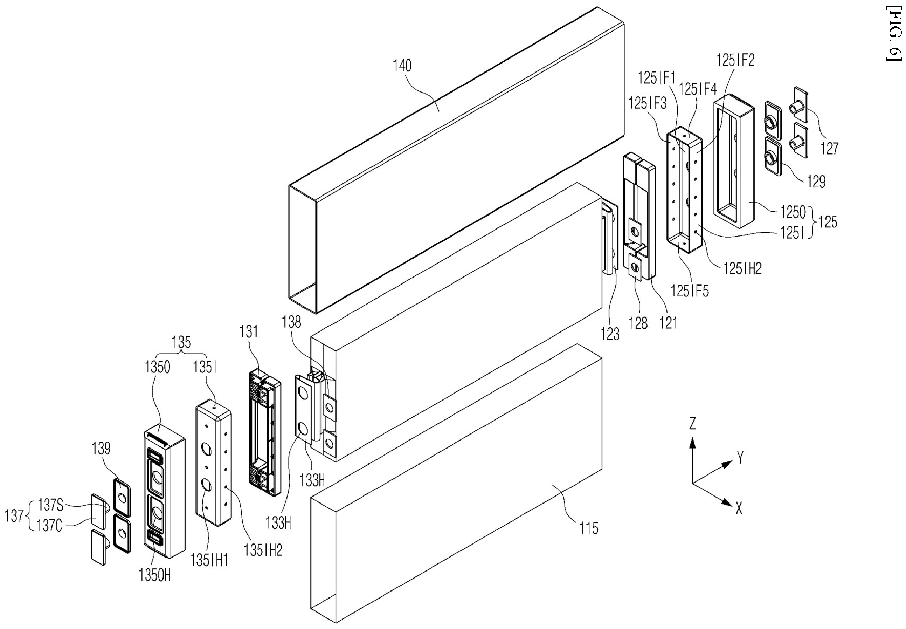

FIGS. 5 and 6 are exploded perspective views of the battery cell 100 according to embodiments. More specifically, FIG. 5 is a perspective view of the battery cell 100 when viewed in a direction different from that of FIG. 6.

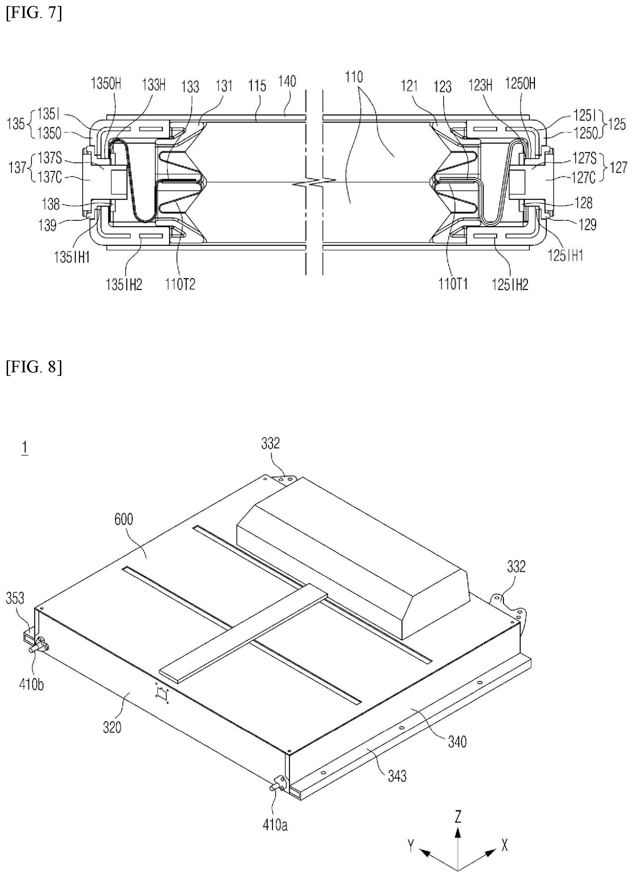

FIG. 7 is a cross-sectional view taken along line 3I-3I' of FIG. 3.

Referring to FIGS. 3 to 7, the battery cell 100 may include electrode assemblies 110, a separator 115, a first terminal assembly 120, a second terminal assembly 130, and a cell case 140. The battery cell 100 may further include an electrolyte in the cell case 140.

Each of the electrode assemblies 110 may be of a jelly-roll type or stack type. A jelly-roll type electrode assembly may include a structure in which a positive electrode, a negative electrode, and a separator between the positive and negative electrodes are wound together. A stack type electrode assembly may include a plurality of positive electrodes and a plurality of negative electrodes that are sequentially stacked, and a plurality of separators therebetween. The perimeter of each of the electrode assemblies 110 may be surrounded by a separator and thus a short circuit between the electrode assemblies 110 due to the direct contact with the electrode assemblies 110 may be prevented.

A thickness of a positive electrode current collector may range from about 3 µm to about 500 µm. The positive electrode current collector may not cause a chemical change in a finally manufactured secondary battery and may have high conductivity. The positive electrode current collector may include, for example, stainless steel, nickel, titanium, baked carbon, and aluminum. The positive electrode current collector may include stainless steel surface-treated with carbon, nickel, titanium, silver, or the like. A surface of the positive electrode current collector may include a fine uneven structure to increase the adhesion of the active material. The positive electrode current collector may be in the form of film, sheet, foil, net, porosity, foam, nonwoven fabric or the like.

A thickness of a negative electrode current collector may range from about 3 µm to about 500 µm. The negative electrode current collector may not cause a chemical change in a finally manufactured secondary battery and may have high conductivity. The negative electrode current collector may include stainless steel, aluminum, nickel, titanium, baked carbon, and aluminum-cadmium alloy. The negative electrode current collector may include stainless steel surface-treated with carbon, nickel, titanium, silver, or the like. A surface of the negative electrode current collector may include a fine uneven structure to increase the adhesion of the active material. The negative electrode current collector may be in the form of film, sheet, foil, net, porosity, foam, nonwoven fabric or the like.

A positive electrode active material is a material that may cause an electrochemical reaction. The positive electrode active material may be a lithium transition metal oxide. For example, the positive electrode active material may include: a layered compound substituted with one or more transition metal, e.g., lithium cobalt oxide (LiCoO₂) or lithium nickel oxide (LiNiO₂); lithium manganese oxide substituted with one or more transition metal; lithium nickel-based oxide expressed by a chemical formula of LiNi_{1-y}M_{y}O₂ (here, M is Co, Mn, Al, CU, Fe, Mg, B, Cr, Zn or Ga, and 0.01≤y≤0.7); lithium nickel cobalt manganese compound oxide expressed by a chemical formula of Li_{1+z}Ni_{b}Mn_{c}Co_{1-(b+c+d)}M_{d}O₍₂₋ₑ₎A, e.g., Li_{1+z}Ni_{1/3}Co_{1/3}Mn_{1/3}O₂ or Li_{1+z}Ni_{0.4}Mn_{0.4}Co_{0.2}O₂ (here, -0.5≤z≤0.5, 0.1≤b≤0.8, 0.1≤c≤0.8, 0≤d≤0.2, 0≤e≤0.2, b+c+d<1, M is Al, Mg, Cr, Ti, Si or Y, and A is F, P or Cl); or olivine-based lithium metal phosphate expressed by a chemical formula of Li₁₊ₓM_{1-y}M'_{y}PO_{4-z}X_{z} (here, M is a transition metal, and more particularly, Fe, Mn, Co or Ni, M' is Al, Mg or Ti, X is F, S or N, -0.5≤x≤+0.5, 0≤y≤0.5, and 0≤z≤0.1).

A negative electrode active material may include, for example, carbon such as non-graphitized carbon or graphite-based carbon. The negative electrode active material may include, for example, a metal composite oxide such as LiₓFe₂O₃ (0≤x≤1), LixWO₂ (0≤x≤1), or SnₓMe₁₋ₓMe'_{y}O_{z} (here, Me is Mn, Fe, Pb, or Ge, Me' is Al, B, P, Si, a Group I element, a Group II element or a Group III element of the periodic table, or halogen, 0<x≤1, 1≤y≤3, and 1≤z≤8). The negative electrode active material may include, for example, lithium metal, lithium alloy, silicon-based alloy, and tin-based alloy. The negative electrode active material may include, for example, a metal oxide such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, or Bi₂O_{5.} The negative electrode active material may include, for example, a conductive polymer such as polyacetylene, a Li-Co-Ni-based material, etc.

Each of the electrode assemblies 110 may include a plurality of first electrode tabs 110T1 and a plurality of second electrode tabs 110T2. The plurality of first electrode tabs 110T1 and the plurality of second electrode tabs 110T2 may have opposite polarities. For example, when each of the plurality of first electrode tabs 110T1 is a positive electrode tab, each of the plurality of second electrode tabs 110T2 may be a negative electrode tab.

The electrode assemblies 110 may be surrounded by the separator 115. The electrode assemblies 110 may be fixed to each other by the separator 115. The separator 115 may include a solid resin separator (SRS) but is not limited thereto.

The first terminal assembly 120 may be coupled to the electrode assemblies 110. The first terminal assembly 120 may include a first insulating frame 121, a first bus bar 123, a first housing 125, first bus bar blocks 128, and first gaskets 129, in addition to the first terminals 127.

The first insulating frame 121 may be adjacent to the first electrode tabs 110T1. A distance between the first insulating frame 121 and the first electrode tabs 110T1 may be different from a distance between the first insulating frame 121 and the second electrode tabs 110T2. The distance between the first insulating frame 121 and the first electrode tabs 110T1 may be less than the distance between the first insulating frame 121 and the second electrode tabs 110T2.

The first insulating frame 121 may be coupled to the first housing 125. The first insulating frame 121 may be fixed to the first housing 125 by interference fit. The first insulating frame 121 may protect the plurality of first electrode tabs 110T1. The first insulating frame 121 may include an insulating material such as polypropylene. The first insulating frame 121 fills a space around the first electrode tabs 110T1 when other elements of the battery cell 100 are wrapped with the cell case 140, thereby preventing deformation of and damage to the first electrode tabs 110T1.

The plurality of first electrode tabs 110T1 may be coupled to the first bus bar 123. The plurality of first electrode tabs 110T1 may be welded with the first bus bar 123. The first bus bar 123 may include a conductive material. The first bus bar 123 may include, for example, a metal such as aluminum.

The first bus bar 123 may include a plurality of metal layers. A thickness of each of the plurality of metal layers may be in a range of about 0.1 mm to about 0.4 mm. Each of the plurality of metal layers may include aluminum. The first bus bar 123 may be flexible and include a bent shape. The first bus bar 123 may have a corrugated structure. The first bus bar 123 may include a portion having a Z-shape. The first bus bar 123 may include holes 123H, and the holes 123H may be penetrated by the first terminals 127.

The first housing 125 may include a first inner housing 125I and a first outer housing 125O. The first inner housing 125I may include a high-rigidity material. The first inner housing 125I may include, for example, a metal such as aluminum. The first outer housing 125O may include an insulating material. The first outer housing 125O may include, for example, a polyphthalamide resin and a thermoplastic material. The first outer housing 125O may include polyamide, polyphenylene sulfide polyamide, polyether ether ketone, polycarbonate, polyoxymethylene, polysulfone, liquid crystal polymer, polybutylene terephthalate, or polyetherimide.

The first housing 125 may be provided by insert-injecting the first inner housing 125I. Accordingly, although FIG. 3 illustrates that the first inner housing 125I and the first outer housing 125O are separated from each other, it is difficult to separate the first inner housing 125I and the first outer housing 125O from each other without at least partially removing the first outer housing 125O after the first housing 125 is provided by insert injection.

The first inner housing 125I may have an approximately hexahedral shape but may include only five faces and thus include an open space. A portion of the first insulating frame 121 may be inserted into the open space of the first inner housing 125I.

The first inner housing 125I may include a first face 125IF1, a second face 125IF2, a third face 125IF3, a fourth face 125IF4, and a fifth face 125IF5. The first face 125IF1 may be surrounded by the second face 125IF2, the third face 125IF3, the fourth face 125IF4, and the fifth face 125IF5. The second face 125IF2 and the third face 125IF3 may be opposite to each other, and the fourth face 125IF4 and the fifth face 125IF5 may be opposite to each other. A length of each of edges of the first face 125IF1 connected to the second face 125IF2 and the third face 125IF3 may be greater than a length of each of edges of the first face 125IF1 connected to the fourth face 125IF4 and the fifth face 125IF5, but embodiments are not limited thereto.

The first face 125IF1 may face the first terminals 127. The first face 125IF1 may include first holes 125IH1 penetrated by the first terminals 127. The first face 125IF1 may further include second holes 125IH2. The first holes 125IH1 and the second holes 125IH2 may alternate in the first face 125IF1. The second face 125IF2 and the third face 125IF3 may include a plurality of second holes 125IH2. Although it is illustrated that the fourth face 125IF4 and the fifth face 125IF5 include one second hole 125IH2, they may include two or more second holes 125IH2.

The second holes 125IH2 may be used for insert injection. A width (or diameter) of each of the second holes 125IH2 may be different from a width (or diameter) of each of the first holes 125IH1. The width (or diameter) of each of the second holes 125IH2 may be less than the width (or diameter) of each of the first holes 125IH1. Due to the second holes 125IH2, a molten resin may be uniformly applied to an entire surface of the first inner housing 125I and thus the first inner housing 125I may be embedded in the first outer housing 125O. According to embodiments, the first outer housing 125O may include a portion between the first inner housing 125I and the first insulating frame 121 and a portion between the first inner housing 125I and the cell case 140.

The first outer housing 125O may include holes 125OH, and the holes 125OH may be penetrated by the first terminals 127. According to embodiments, the first outer housing 125O prevents a short circuit between the first terminals 127 and the first inner housing 125I and thus it is unnecessary to provide additional components to prevent a short circuit between the first terminals 127 and the first inner housing 125I.

Each of the first terminals 127 may include a cylindrical portion 127S and a contact portion 127C. The contact portion 127C of each of the first terminals 127 may protrude to the outside of the first housing 125, thus providing an electrical path between an external electrical element and the battery cell 100. The cylindrical portion 127S of each of the first terminals 127 may penetrate a corresponding one of the holes 123H, a corresponding one of the first holes 125IH1, and a corresponding one of the holes 125OH.

Each of the first terminals 127 may be configured to be electrically connected to the electrode assemblies 110. According to embodiments, each of the first terminals 127 may be a positive electrode terminal of the battery cell 100 but is not limited thereto. Each of the first terminals 127 may be a negative electrode terminal of the battery cell 100.

Each of the first terminals 127 may be spaced apart from the first bus bar 123 with a corresponding one of the first gaskets 129 therebetween. A corresponding one of the first bus bar blocks 128 may be coupled to the cylindrical portion 127S of each of the first terminals 127. Each of the first bus bar blocks 128 may be in contact with a corresponding of the first terminals 127 and the first bus bar 123 and thus an electrical connection may be provided between the first bus bar 123 and the first terminals 127. According to other embodiments, each of the first terminals 127 may be in direct contact with the first bus bar 123.

The first bus bar 123 may include a portion between the first bus bar blocks 128 and the first housing 125. A width of each of the first bus bar blocks 128 may be greater than a width (or diameter) of each of the holes 123H of the first bus bar 123 to prevent separation of the first bus bar 123 and the first terminals 127. The first terminals 127 may be riveted and thus the first bus bar 123, the first bus bar blocks 128, and the first terminals 127 may be fixed.

Each of the first bus bar blocks 128 may have a plate shape with a hole 128H. Each of the first bus bar blocks 128 may have a tetragonal shape. A width (or diameter) of the hole 128H of each of the first bus bar blocks 128 may be different from a width (or diameter) of each of the holes 123H of the first bus bar 123. The width (or diameter) of the hole 128H of each of the first bus bar blocks 128 may be less than the width (or diameter) of each of the holes 123H of the first bus bar 123.

A portion of a corresponding one of the first terminals 127 and a portion of a corresponding one of the first gaskets 129 may be in each of the holes 123H of the first bus bar 123. Inner circumferences of the first bus bar 123 defining the holes 123H may surround one of the first terminals 127 and one of the first gaskets 129.

The cylindrical portion 127S of a corresponding one of the first terminals 127 and a portion of a corresponding one of the first gaskets 129 may be in each of the holes 123H of the first bus bar 123. The inner circumferences of the first bus bar 123 defining the holes 123H may surround the cylindrical portion 127S of the corresponding one of the first terminals 127 and the corresponding one of the first gaskets 129.

The cylindrical portion 127S of a corresponding one of the first terminals 127 may be in the hole 128H of each of the first bus bar blocks 128. Inner circumference of each of the first bus bar blocks 128 defining the hole 128H of each of the first bus bar blocks 128 may surround the cylindrical portion 127S of the corresponding one of the first terminals 127.

The first gaskets 129 may be between the first terminals 127 and the first housing 125. The first gaskets 129 may provide insulation and a liquid seal to the first terminals 127. The first gaskets 129 may include rubber, polyethylene, polyvinyl chloride, silicon, Teflon, polyamide or fiber-reinforced plastic but are not limited thereto.

The second terminal assembly 130 may be coupled to the electrode assemblies 110. The second terminal assembly 130 may be spaced apart from the first terminal assembly with the electrode assemblies 110 therebetween. The second terminal assembly 130 may include a second insulating frame 131, a second bus bar 133, a second housing 135, second bus bar blocks 138, and second gaskets 139, in addition to the second terminals 137.

The second insulating frame 131 may be adjacent to the second electrode tabs 110T2. A distance between the second insulating frame 131 and the second electrode tabs 110T2 may be different from a distance between the second insulating frame 131 and the first electrode tabs 110T1. The distance between the second insulating frame 131 and the second electrode tabs 110T2 may be less than the distance between the second insulating frame 131 and the first electrode tabs 110T1.

The second insulating frame 131 may be coupled to the second housing 135. The second insulating frame 131 may be coupled to the second housing 135 by interference fit. The second insulating frame 131 may protect the plurality of second electrode tabs 110T1. The second insulating frame 131 may include an insulating material such as polypropylene. The second insulating frame 131 fills a space around the second electrode tabs 110T2 when other elements of the battery cell 100 are wrapped with the cell case 140, thereby preventing deformation of and damage to the second electrode tabs 110T2.

The plurality of second electrode tabs 110T2 may be coupled to the second bus bar 133. The plurality of second electrode tabs 110T1 may be welded with the second bus bar 133. The second bus bar 133 may include a conductive material. The second bus bar 133 may include, for example, a metal such as copper. A thickness of the second bus bar 133 may be different from a thickness of the first bus bar 123. The thickness of the second bus bar 133 may be less than the thickness of the first bus bar 123.

The second bus bar 133 may include a plurality of metal layers. A thickness of each of the plurality of metal layers may be in a range of about 0.1 mm to about 0.4 mm. Each of the plurality of metal layers may include aluminum. The second bus bar 133 may be flexible and may include a bent portion. The second bus bar 133 may have a corrugated structure. The second bus bar 133 may include a portion having a Z shape. The second bus bar 133 may include holes 133H, and the holes 133H may be penetrated by the second terminals 137.

The second housing 135 may include a second inner housing 135I and a second outer housing 135O. The second inner housing 135I may include a high-rigidity material. The second inner housing 135I may include, for example, a metal such as aluminum. The second outer housing 135O may include, for example, an insulating material such as a polyphthalamide resin. The second outer housing 135O may include polyamide, polyphenylene sulfide, polyether ether ketone, polycarbonate, polyoxymethylene, polysulfone, liquid crystal polymer, polybutylene terephthalate, or polyetherimide.

The second housing 135 may be provided by insert-injecting the second inner housing 135I. Accordingly, although FIG. 3 illustrates that the second inner housing 135I and the second outer housing 135O are separated from each other, it is difficult to separate the second inner housing 135I and the second outer housing 135O from each other without at least partially removing the second outer housing 135O after the second housing 135 is provided by insert injection.

The second inner housing 135I may have an approximately hexahedral shape but may include only five faces and thus include an open space. A portion of the second insulating frame 131 may be inserted into the open space of the second inner housing 135I.

The second inner housing 135I may include a first face 135IF1, a second face 135IF2, a third face 135IF3, a fourth face 135IF4, and a fifth face 135IF5. The first face 135IF1 may be surrounded by the second face 135IF2, the third face 135IF3, the fourth face 135IF4, and the fifth face 135IF5. The second face 135IF2 and the third face 135IF3 may be opposite to each other, and the fourth face 135IF4 and the fifth face 135IF5 may be opposite to each other. A length of each of edges of the first face 135IF1 connected to the second face 135IF2 and the third face 135IF3 may be greater than a length of each of edges of the first face 135IF1 connected to the fourth face 135IF4 and the fifth face 135IF5, but embodiments are not limited thereto.

The first face 135IF1 may face the second terminals 137. The first face 135IF1 may include first holes 131IH1 penetrated by the second terminals 137. The first face 135IF1 may further include second holes 131IH2. The first holes 131IH1 and the second holes 131IH2 may alternate in the first face 135IF1. The second face 135IF2 and the third face 135IF3 may include a plurality of second holes 131IH2. Although it is illustrated that the fourth face 135IF4 and the fifth face 135IF5 include one second hole 131IH2, they may include two or more second holes 131IH2.

The second holes 131IH2 may be used for insert injection. Due to the second holes 131IH2, a molten resin may be uniformly applied to an entire surface of the second inner housing 135I and thus the second inner housing 135I may be embedded in the second outer housing 135O. According to embodiments, the second outer housing 135O may include a portion between the second inner housing 135I and the second insulating frame 131 and a portion between the second inner housing 135I and the cell case 140.

The second outer housing 135O may include holes 135OH, and the holes 135OH may be penetrated by the second terminals 137. Each of the second terminals 137 may include a cylindrical portion 137S and a contact portion 137C. The contact portion 137C of each of the second terminals 137 may protrude to the outside of the second housing 135, thus providing an electrical path between an external electrical element and the battery cell 100. The cylindrical portion 137S of each of the second terminals 137 may penetrate a corresponding one of the holes 133H, a corresponding one of the second holes 135IH1, and a corresponding one of the holes 135OH.

Each of the second terminals 137 may be configured to be electrically connected to the electrode assemblies 110. According to embodiments, each of the second terminals 137 may be a negative electrode terminal of the battery cell 100 but is not limited thereto. Each of the second terminals 137 may be a positive electrode terminal of the battery cell 100.

Each of the second terminals 137 may be spaced apart from the second bus bar 133 with a corresponding one of the second gaskets 139 therebetween. Each of the second bus bar blocks 138 may be in contact with a corresponding of the second terminals 137 and the second bus bar 133 and thus an electrical connection may be provided between the second bus bar 133 and the second terminals 137. According to other embodiments, each of the second terminals 137 may be in direct contact with the second bus bar 133.

The second bus bar 133 may include a portion between the second bus bar blocks 138 and the housing 135. A width (or diameter) of each of the second bus bar blocks 138 may be greater than a width (or diameter) of each of the holes 133H of the second bus bar 133, thereby preventing separation of the second bus bar 133 and the second terminals 137. The second terminals 137 may be riveted and thus the second bus bar 133, the second bus bar blocks 138, and the second terminals 137 may be fixed.

Each of the second bus bar blocks 138 may have a plate shape with a hole 138H. Each of the second bus bar blocks 138 may have a tetragonal shape. A width (or diameter) of the hole 138H of each of the second bus bar blocks 138 may be different from a width (or diameter) of each of the holes 133H of the second bus bar 133. The width (or diameter) of the hole 138H of each of the second bus bar blocks 138 may be less than the width (or diameter) of each of the holes 133H of the second bus bar 133.

The cylindrical portion 137S of a corresponding one of the second terminals 137 and a portion of a corresponding one of the second gaskets 139 may be in each of the holes 133H of the second bus bar 133. The inner circumferences of the second bus bar 133 defining the holes 133H may surround the cylindrical portion 137S of the corresponding one of the second terminals 137 and the corresponding one of the second gaskets 139.

The cylindrical portion 137S of a corresponding one of the second terminals 137 may be in the hole 138H of each of the second bus bar blocks 138. The inner circumference of each of the second bus bar blocks 138 defining the hole 138H of each of the second bus bar blocks 138 may surround the cylindrical portion 137S of the corresponding one of the second terminals 137.

The second gaskets 139 may be between the second terminals 137 and the second housing 135. The second gaskets 139 may provide insulation and a liquid seal to the second terminals 137. The second gaskets 139 may include rubber, polyethylene, polyvinyl chloride, silicon, Teflon, polyamide or fiber-reinforced plastic but are not limited thereto.

The cell case 140 may be a pouch case including an aluminum laminate sheet. The cell case 140 may include an inner resin layer, a metal layer, and an outer resin layer. The inner resin layer may have thermal adhesion, thus enabling sealing of the cell case 140. The inner resin layer may include, for example, a polyolefin-based material. The metal layer may include an alloy of iron, carbon, chromium and manganese, an alloy of iron, chromium and nickel, or aluminum.

The cell case 140 may surround the first outer housing 125O and the second outer housing 135O. According to embodiments, the first outer housing 125O and the second outer housing 135O include a PPA resin and the like and thus may be directly thermally fused to the cell case 140. That is, additional processes, such as additional application of PPA and/or surface treatment, for thermal fusion of the first and second housings 125 and 135 and the cell case 140 may be omitted.

The cell case 140 may be in contact with each of the first outer housing 125O of the first housing 125 and the second outer housing 135O of the second housing 135. Furthermore, the first inner housing 125I is embedded in the first outer housing 125O and the second inner housing 135I is embedded in the second outer housing 135O, and thus, the strength and reliability of the coupling of the housings 125 and 135 and the cell case 140 may be improved.

### (Third Embodiment)

FIG. 8 is a perspective view of a battery pack 1 according to an embodiment of the present disclosure.

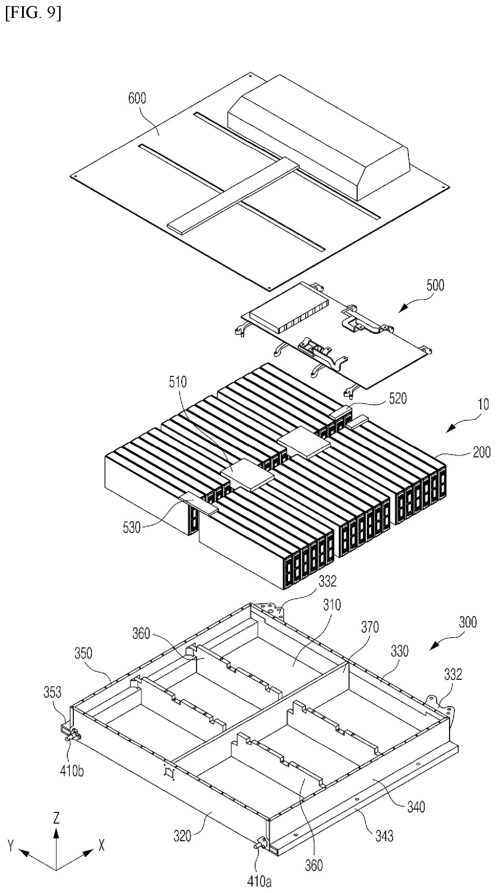

FIG. 9 is an exploded perspective view of the battery pack 1 of FIG. 8.

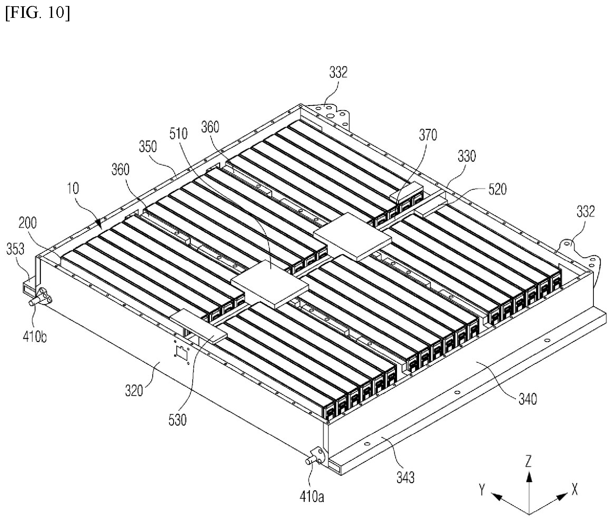

FIG. 10 is a perspective view illustrating an arrangement between elements of the battery pack 1, in which a pack cover 600 of the battery pack 1 of FIG. 8 is omitted.

Referring to FIGS. 8 to 10, the battery pack 1 according to an embodiment of the present disclosure may include a plurality of battery cell assemblies 10, a pack housing 300, cooling ports 410a and 410b, an electronic component assembly 500, first to third inter-bus bars 510, 520 and 530, and the pack cover 600.

The battery cell assemblies 10 may not be accommodated in a frame but may be loaded directly in the pack housing 300 . That is, the battery pack 1 may be of a moduleless type and each of the battery cell assemblies 10 may not include a module frame but embodiments are not limited thereto. Technicians of ordinary skill in the art will be able to easily derive an embodiment in which each of the battery cell assemblies 10 includes a module frame, based on the description herein.

The electronic component assembly 500 may include a relay device, a current sensor, a fuse, a battery management system (BMS), and a manual service disconnector (MSD). The relay device may be a switching device for selectively opening or closing a charge/discharge path through which a current flows. The relay device may block the flow of charging/discharging current when an abnormal situation occurs in the battery pack 1. The BMS may be configured to control overall charging and discharging operations of the battery cell assemblies 10. The MSD is a system for selectively shutting off the power of a high-voltage battery by a physical method. The MSD may be configured to disconnect a service plug to shut off power as needed.

The pack housing 300 may provide a space for accommodating the battery cell assemblies 10 and the electronic component assembly 500. The pack housing 300 may include a material (e.g., a metal) with high rigidity against the battery cell assemblies 10 and the electronic component assembly 500 to protect the battery cell assemblies 10 and the electronic component assembly 500 from external impact.

The pack housing 300 of the present embodiment may include a base plate 310 of a flat plate shape, and side walls 320, 330, 340 and 350 substantially perpendicular to the base plate 310. Some side walls 330 and 340 may include mounting wings 343 and 353. The mounting wings 343 and 353 may be used to load the battery pack 1 into an application (e.g., a vehicle). Brackets 332 may be used to fix the battery pack 1 to an application (e.g., a vehicle).

The X-axis direction and the Y-axis direction may be substantially parallel to an upper surface of the base plate 310. The Z-axis direction may be substantially perpendicular to the upper surface of the base plate 310.

The pack housing 300 may further include a center beam 370 and cross-beams 360 that divide a space in which the battery cell assemblies 10 are loaded. The center beam 370 and the cross-beams 360 may be on the base plate 310. The center beam 370 and the cross-beams 360 may be fixed to the base plate 310 by bolting and/or welding.

The center beam 370 may extend in the X-axis direction. The center beam 370 may isolate the battery cell assemblies 10 in the Y-axis direction. The center beam 370 may be interposed between the battery cell assemblies 10 in the Y-axis direction. The cross-beams 360 may extend in the Y-axis direction. The cross-beams 360 may be interposed between the battery cell assemblies 10 in the X-axis direction. The cross-beams 360 may isolate the battery cell assemblies 10 in the X-axis direction.

The base plate 310, the side walls 320, 330, 340 and 350, the cross-beams 360, and the center beam 370 may be provided by an extrusion process. Accordingly, the base plate 310, the side walls 320, 330, 340 and 350, the cross-beams 360, and the center beam 370 may have a constant cross section in a longitudinal direction, except for a change due to mechanical tooling.

The cooling ports 410a and 410b may be coupled to the base plate 310. The base plate 310 may include a plurality of cooling channels, and the cooling ports 410a and 410b may be configured to introduce or discharge a cooling material into or from the plurality of cooling channels.

Each of the first inter-bus bars 510 may overlap corresponding ones of the cross-beams 360 and the center beam 370 in the Z-axis direction. Each of the first inter-bus bars 510 may overlap four corresponding battery cell assemblies 10 among the plurality of battery cell assemblies 10 in the Z-axis direction. The first inter-bus bars 510 may connect the battery cell assemblies 10, which are arranged in the X-axis direction, in series. The third inter-bus bar 530 may connect the battery cell assemblies 10, which are spaced apart from each other in the Y-axis direction, in series.

The second inter-bus bar 520 may be an output terminal for outputting a resulting voltage of the plurality of battery cell assemblies 10 connected in series by the first and third inter-bus bars 510 and 530. The second inter-bus bar 520 may be connected to wires, which are connected to an external load and a charging system, directly or through the electronic component assembly 500.

The present disclosure has been described above in more detail with reference to the drawings, the embodiments, etc. However, the configurations illustrated in the drawings or embodiments described in the present specification are only examples of the present disclosure and do not reflect all the technical ideas of the present disclosure and thus it should be understood that various equivalents and modifications that replace the configurations would have been made at the filing date of the present application.

## Claims

1. A battery cell assembly comprising:
first and second battery cells each including first and second electrode assemblies, first terminal assemblies, second terminal assemblies and a cell case, wherein each of the first and second electrode assemblies includes a positive electrode, a negative electrode, and a separator, the first terminal assemblies are coupled to the first and second electrode assemblies and include first terminals, the second terminal assemblies are coupled to the first and second electrode assemblies and include second terminals, and the cell case covers the first and second electrode assemblies and the first and second terminal assemblies; and
an inter-bus bar connected to the first and second battery cells.

2. The battery cell assembly of claim 1, wherein the first terminal assembly of each of the first and second battery cells further includes a first bus bar connected to the positive electrode of each of the first and second electrode assemblies,
the first bus bar is penerated by each of the first terminals,
the second terminal assembly of each of the first and second battery cells further includes a second bus bar connected to the negative electrode of each of the first and second electrode assemblies, and
the second bus bar is penetrated by each of the second terminals.

3. The battery cell assembly of claim 2, wherein the first terminal assembly of each of the first and second battery cells includes first bus bar blocks in contact with the first bus bar and a corresponding one of the first terminals, and
the second terminal assembly of each of the first and second battery cells includes second bus bar blocks in contact with the second bus bar and a corresponding one of the second terminals.

4. The battery cell assembly of claim 1, wherein the inter-bus bar is in contact with each of the first terminals, and
the inter-bus bar is in contact with each of the second terminals.

5. The battery cell assembly of claim 1, wherein the inter-bus bar is welded with each of the first terminals, and
the inter-bus bar is welded with each of the second terminals.

6. The battery cell assembly of claim 1, wherein the inter-bus bar includes first welding patterns overlapping the first terminals and second welding patterns overlapping the second terminals.

7. The battery cell assembly of claim 6, wherein each of the first welding patterns and the second welding patterns has a line shape.

8. A battery cell assembly comprising:
first and second battery cells arranged in a fisrt direction, wherein each of the first and second battery cells includes first terminal assemblies including first terminals and second terminal assemblies including second terminals; and
an inter-bus bar in contact with each of the first terminals and each of the second teminals.

9. The battery cell assembly of claim 8, wherein the inter-bus bar includes first welding patterns overlapping the first terminals in a second direction perpendicular to the first direction, and second welding patterns overlapping the second terminals in the second direction.

10. The battery cell assembly of claim 9, wherein each of the first welding patterns and the second welding patterns has a line shape.

11. The battery cell assembly of claim 9, wherein the first welding patterns overlap each other in a third direction perpendicular to each of the first and second directions.

12. The battery cell assembly of claim 11, wherein the second welding patterns overlap each other in the third direction.
